# EUROPEAN PATENT SPECIFICATION

(11) **EP 2 958 509 B1**
(45) Date of publication and mention of the grant of the patent: **11.04.2018**
(21) Application number: 14709544.2
(22) Date of filing: 18.02.2014
(51) Int. Cl.: A61C 1/08

(54) **SURGICAL TEMPLATE ARRANGEMENT AND METHOD**
ANORDNUNG UND VERFAHREN FÜR CHIRURGISCHE SCHABLONEN
SYSTÈME DE GABARIT CHIRURGICAL ET PROCÉDÉ

(30) Priority: 20.02.2013 GB 201302919
(43) Date of publication of application: 30.12.2015
(73) Proprietor: Nobel Biocare Services AG, 8302 Kloten (CH)
(72) Inventor: JOHANSSON, Ulf, 442 30 Kungälv (SE); WOUTERS, Veerle, 3010 Kessel-lo (BE); KUNZ, Pascal, 8058 Zurich-Airport (CH)
(74) Representative: Jensen, Olaf Sven
(86) International application number: PCT/EP2014/000435
(87) International publication number: WO 2014/127908

(56) References cited:
- WO-A1-97/43981
- WO-A2-2007/035326
- FR-A1- 2 898 485
- US-A- 5 718 579
- US-A1- 2011 275 032

## Description

The present invention relates to a surgical template arrangement for a dental application, the surgical template arrangement comprising a surgical template including a through hole, and a guide sleeve placed in the through hole. The present invention also relates to a method of attaching a guide sleeve in a through hole of a dental surgical template, and a corresponding system.

A surgical template arrangement as mentioned above may be used for guiding drills and implants in guided dental surgery. The surgical template is formed in accordance with the dental situation of a patient and one or more virtually planned implants, and during surgery it is placed as a template in the patient's mouth for assisting the dentist/dental surgeon when drilling and placing the implant(s).

In a surgical template arrangement in accordance with prior art, the guide sleeve is glued or cemented to the surgical template. However, the cement requires space and a cement inlet canal. Also, the guide sleeve may be improperly positioned during cementation. An alternative prior art solution includes externally threaded guide sleeves.

It is an object of the present invention to provide an improved surgical template arrangement and method. In particular, it is an object to reduce the space requirement for the guide sleeve, and/or increase the accuracy of the final guide sleeve position.

The present invention is defined in the appended independent claims. Embodiments are defined in the appended dependent claims.

According to an aspect of the present invention, there is provided a surgical template arrangement for a dental application, the surgical template arrangement comprising: a surgical template including a through hole; and a guide sleeve placed in the through hole and riveted to the surgical template.

The guide sleeve may at one end have a flange abutting a first area of the surgical template, which first area surrounds a first opening of the through hole adjacent said one end, and wherein the guide sleeve at the opposite end has a bent portion engaging a second area of the surgical template, which second area surrounds a second opening of the through hole adjacent said opposite end.

Said first area may be on the occlusal side of the surgical template.

Said first area may recessed relative to the immediately surrounding material of the surgical template for housing the flange.

Said second area may be on the apical side of the surgical template.

Said second area may be adapted to house the bent portion of the guide sleeve.

The guide sleeve may be made from sheet metal.

The surgical template arrangement may be devoid of any additional means for attaching the guide sleeve, such as cement or glue or threads.

According to another aspect of the present invention, there is provided a method of attaching a guide sleeve in a through hole of a dental surgical template, which method comprises: placing the guide sleeve in the through hole; and riveting the guide sleeve to the dental surgical template. This aspect may exhibit the same or similar feature and technical effects as the previously described aspect, and vice versa.

Riveting the guide sleeve to the dental surgical template may comprise: supporting one end of the guide sleeve using an anvil while a portion of the guide sleeve at the opposite end is bent using a forming tool adapted to move axially to the guide sleeve.

The forming tool may include a protruding cylindrical portion having a base and an opposite free end, wherein the base of the protruding cylindrical portion is encircled by a recess having a substantially U-shaped cross-section and adapted to receive and bend said portion of the guide sleeve.

The protruding cylindrical portion may have a diameter corresponding to the inner diameter of the guide sleeve.

The anvil may include a recess adapted to receive said protruding cylindrical portion, wherein the recess has a limited depth in the axial direction.

Said portion of the guide sleeve may first be bent radially outwards away from a central longitudinal axis of the guide sleeve and then axially backwards towards the surgical template such that said opposite end of the guide sleeve engages the surgical template.

The guide sleeve may at said one end have a flange.

According to yet another aspect of the present invention, there is provided a system adapted to perform the method of attaching a guide sleeve in a through hole of a dental surgical template in accordance the previous aspect.

These and other aspects of the present invention will now be described in more detail, with reference to the appended drawings showing a currently preferred embodiment of the invention.
Fig. 1a is a perspective view of a surgical template arrangement according to an embodiment of the present invention.
Fig. 1b is a partial cross-sectional side view of the surgical template arrangement of fig. 1a.
Fig. 1c is a partial cross-sectional perspective view of the surgical template arrangement of figs. 1a-1b.
Figs. 2a-2f are side views illustrating a method according to an embodiment of the present invention.
Fig. 3 is a cross-sectional perspective view of a forming tool according to an embodiment of the present invention.

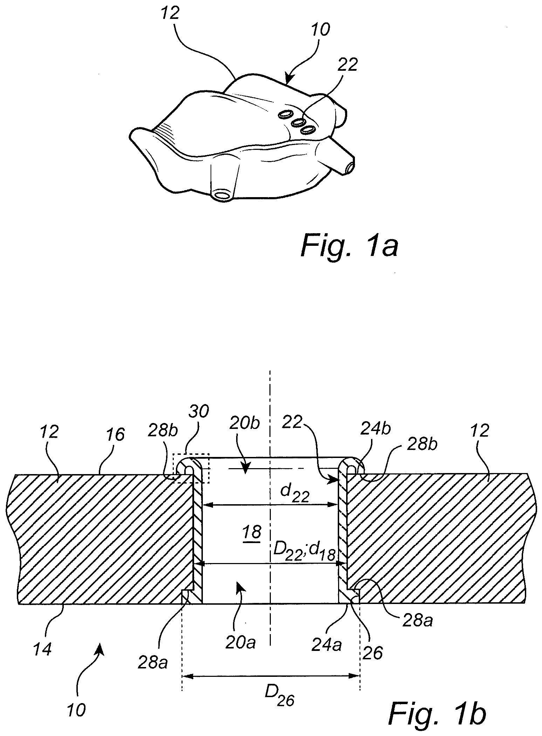

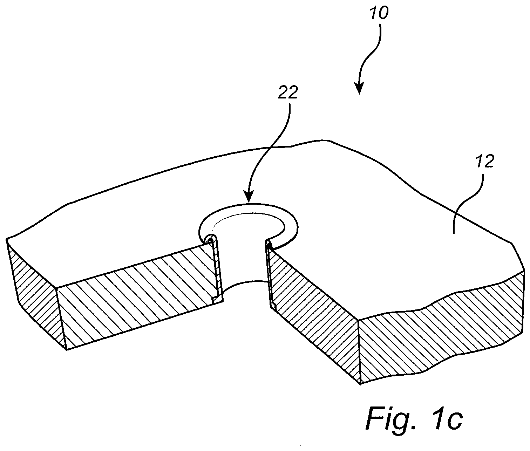

Figs. 1a-1c show a surgical template arrangement 10 for a dental application according to an embodiment of the present invention. The dental application may for example be guided implantology, as discussed in the background description.

The surgical template arrangement 10 comprises a (dental) surgical template 12. The surgical template 12 can be made of acrylic material. The surgical template 12 has an occlusal side 14 and an opposite apical side 16. The occlusal side 14 is intended to face away from the jaw where the surgical template 12 is placed during use, whereas the apical side 16 is adapted to face and match any teeth and/or the gum of the jaw where the surgical template 12 is to be placed. The surgical template 12 includes at least one through hole 18. The position of the through hole 18 generally corresponds to the position of a planned dental implant (not shown). The through hole 18 has a first opening 20a and a second opposite opening 20b. Here, the first opening 20a is in the occlusal side 14, whereas the second opening 20b is in the apical side 16. The through hole 18 is usually straight and cylindrical.

The surgical template arrangement 10 comprises a guide sleeve 22 placed in the through hole 18. In accordance with the present invention, the guide sleeve 22 is riveted to the surgical template 12.

The guide sleeve 22 is generally made of thin-walled sheet metal, with a flange 26 at one end 24a. The guide sleeve 22 may for instance comprise titanium. The outer diameter D₂₂ of the tubular portion of the guide sleeve 22 matches the inner diameter d₁₈ of the through hole 18, whereas the inner diameter d₂₂ of the tubular portion is smaller and the diameter D₂₆ of the flange 26 is greater. The flange 26 abuts a first area 28a of the surgical template 12 surrounding one of the openings of the through hole 18, preferably the first opening 20a in the occlusal side 14 of the surgical template 12. Also preferably, the first area 28a is recessed relative to the immediately surrounding material of the surgical template 12 for housing the flange 26, as seen in fig. 1b.

At the opposite end 24b, the guide sleeve 22 has a portion 30 which is bent. The end 24b (of the bent portion 30) of the guide sleeve 22 engages a second area 28b of the surgical template 12 surrounding the other opening of the through hole 18, preferably the second opening 20b in the apical side 16 of the surgical template 12. The second area 28b may be adapted (e.g. recessed; not shown) to house the bent portion 30 of the guide sleeve 22.

By riveting the guide sleeve 22 to the surgical template 12, no other fastening means such as cement or glue or threads are necessary. Also, there is no need for any extra space in the through hole 18 around the riveted guide sleeve 22. Also, the riveted guide sleeve 22 may immediately be fastened in the correct, planned position.

In conventional rivet terms, the flange 26 is the (factory) "head", whereas the bent portion 30 is the "second head" formed by deformation of the "plain end".

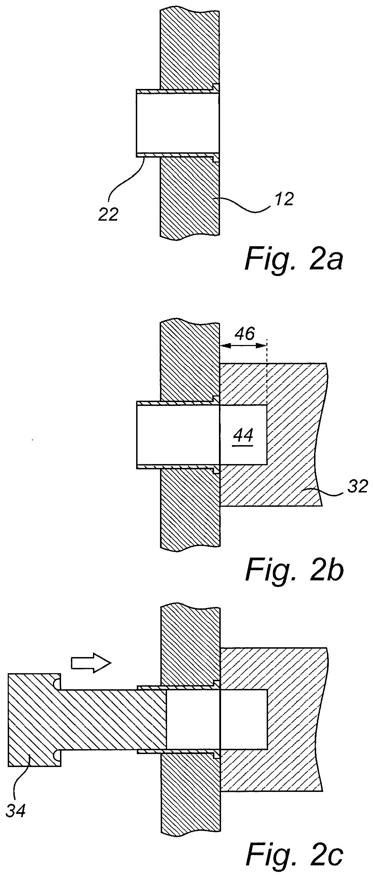

A method of attaching the guide sleeve 22 in the through hole 18 of the (dental) surgical template 12 according to an embodiment of the present invention will now be described with further reference to figs. 2a-2f. The method may include the use of an anvil 32 and a forming tool 34. The anvil 32 and the forming tool 34 can be used manually, but they are preferably incorporated in a system or machine which may be automatic.

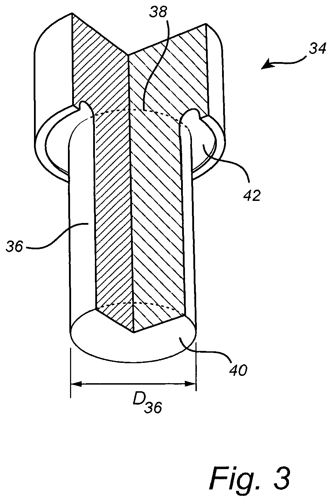

The forming tool 34 includes a protruding cylindrical portion 36 having a base 38 and an opposite free end 40, see also fig. 3. The protruding cylindrical portion 36 preferably has a diameter D₃₆ that corresponds to the inner diameter d₂₂ of the tubular portion of the guide sleeve 22. The base 38 is encircled by a recess 42. The recess 42 has a U-shaped cross-section, and the recess 42 is open towards the guide sleeve 22/surgical template 12 as seen in the setup of fig. 2c.

The anvil 32 may include a central recess 44. The recess 44 is open towards the guide sleeve 22/surgical template 12 as seen in the setup of fig. 2c, and the recess 44 is adapted to receive the protruding cylindrical portion 36 of the forming tool 34. The recess 44 has a limited depth 46 in the axial direction, to ensure that the forming tool 34 is not advanced too far as will be explained further below.

In the method of the present embodiment, the guide sleeve 22 is first placed in the through hole 18, such that the flange 26 abuts/rests against the first area 28a of the surgical template 12 (fig. 2a).

The anvil 32 is then be brought into contact with the opposite side of the flange 26, whereby the end 24a of the guide sleeve 22 is supported by the anvil 32 to prevent axial displacement of the guide sleeve 22 (fig. 2b).

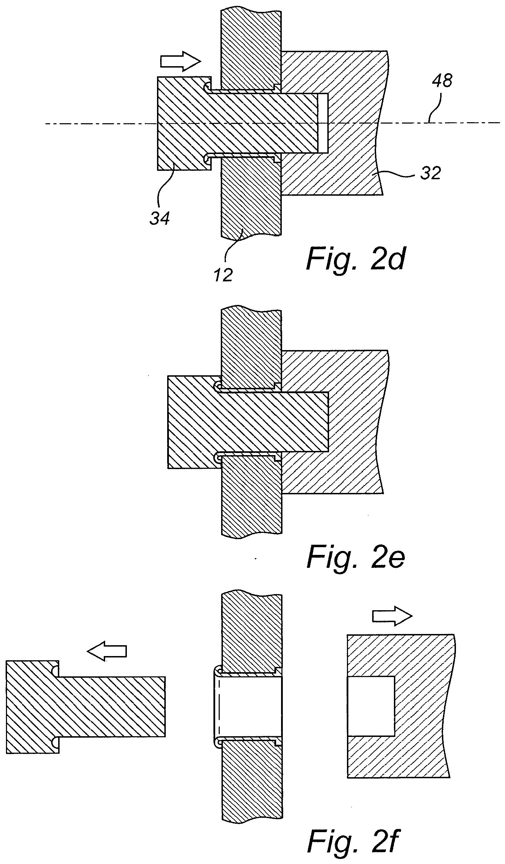

Thereafter the protruding cylindrical portion 36 of the forming tool 34 is inserted into the tubular portion of the guide sleeve 22 by moving/advancing forming tool 34 axially to the right as indicated by the arrow in fig. 2c. The forming tool 34 is further advanced so that the portion 30 at the end 24b of the guide sleeve 22 enters the recess 42 and becomes bent radially outwards away from a central longitudinal axis 48 of the guide sleeve 22 (fig. 2d). By further advancing the forming tool 34 to the right, the portion 30 is bent axially backwards towards the surgical template 12 until the end 24b of the guide sleeve 22 engages the surgical template 12 (fig. 2e). By now, the guide sleeve 22 is "closed" and thereby riveted/secured to the surgical template 12. The limited depth 46 of the recess 44 in the anvil 32 is selected to ensure that the guide sleeve 22 is not "over closed", which otherwise could damage the surgical template 12. Further, the fact that the protruding cylindrical portion's diameter D₃₆ corresponds to the inner diameter d₂₂ of the tubular portion of the guide sleeve 22 prevents deformation of the guide sleeve 22 (except at the bent portion 30), which in turn ensures that guiding tools or drills or dental implants or the like will fit in the guide sleeve 22 also after it has been "closed".

Finally, the forming toll 34 and the anvil 32 may be retreated (fig. 2f).

The person skilled in the art realizes that the present invention by no means is limited to the preferred embodiments described above. On the contrary, many modifications and variations are possible within the scope of the appended claims.

## Claims

1. A surgical template arrangement (10) for a dental application, the surgical template arrangement comprising:
a surgical template (12) including a through hole (18); and
a guide sleeve (22) placed in the through hole and riveted to the surgical template.

2. A surgical template arrangement according to claim 1, wherein the guide sleeve at one end (24a) has a flange (26) abutting a first area (28a) of the surgical template, which first area surrounds a first opening (20a) of the through hole adjacent said one end (24a), and wherein the guide sleeve at the opposite end (24b) has a bent portion (30) engaging a second area (28b) of the surgical template, which second area surrounds a second opening (20b) of the through hole adjacent said opposite end (24b) .

3. A surgical template arrangement according to claim 2, wherein said first area is on the occlusal side (14) of the surgical template.

4. A surgical template arrangement according to claim 2 or 3, wherein said first area (28a) is recessed relative to the immediately surrounding material of the surgical template for housing the flange (26).

5. A surgical template arrangement according to any one of claims 2-4, wherein said second area is on the apical side (16) of the surgical template.

6. A surgical template arrangement according to any one of claims 2-5, wherein said second area is adapted to house the bent portion of the guide sleeve.

7. A surgical template arrangement according to any preceding claim, wherein the guide sleeve is made from sheet metal.

8. A surgical template arrangement according to any preceding claim, devoid of any additional means for attaching the guide sleeve, such as cement or glue or threads.

9. A method of attaching a guide sleeve (22) in a through hole (18) of a dental surgical template (12), which method comprises:
placing the guide sleeve in the through hole; and
riveting the guide sleeve to the dental surgical template.

10. A method according to claim 9, wherein riveting the guide sleeve to the dental surgical template comprises:
supporting one end (24a) of the guide sleeve using an anvil (32) while a portion (30) of the guide sleeve at the opposite end (24b) is bent using a forming tool (34) adapted to move axially to the guide sleeve.

11. A method according to claim 10, wherein the forming tool includes a protruding cylindrical portion (36) having a base (38) and an opposite free end (40), and wherein the base of the protruding cylindrical portion is encircled by a recess (42) having a substantially U-shaped cross-section and adapted to receive and bend said portion of the guide sleeve.

12. A method according to claim 11, wherein the protruding cylindrical portion (36) has a diameter (D₃₆) corresponding to the inner diameter (d₂₂) of the guide sleeve.

13. A method according to claim 11 or 12, wherein the anvil includes a recess (44) adapted to receive said protruding cylindrical portion, and wherein the recess has a limited depth (46) in the axial direction.

14. A method according to any one of claims 10-13, wherein said portion of the guide sleeve is first bent radially outwards away from a central longitudinal axis of the guide sleeve and then axially backwards towards the surgical template such that said opposite end of the guide sleeve engages the surgical template.

15. A method according to any one of claims 10-14, wherein the guide sleeve at said one end has a flange.

## Patentansprüche

1. Anordnung (10) für chirurgische Schablonen für eine dentale Anwendung, wobei die Anordnung für chirurgische Schablonen Folgendes umfasst:
eine chirurgische Schablone (12), einschließend eine Durchgangsbohrung (18); und
eine Führungsbuchse (22), die in der Durchgangsbohrung platziert und an der chirurgischen Schablone vernietet ist.

2. Anordnung für chirurgische Schablonen nach Anspruch 1, wobei die Führungsbuchse an einem Ende (24a) einen Flansch (26) aufweist, der an einem ersten Bereich (28a) der chirurgischen Schablone anliegt, wobei der erste Bereich eine erste Öffnung (20a) der Durchgangsbohrung angrenzend an das eine Ende (24a) umgibt, und wobei die Führungsbuchse an dem gegenüberliegenden Ende (24b) einen gebogenen Abschnitt (30) aufweist, der in einen zweiten Bereich (28b) der chirurgischen Schablone eingreift, wobei der zweite Bereich eine zweite Öffnung (20b) der Durchgangsbohrung angrenzend an das gegenüberliegende Ende (24b) umgibt.

3. Anordnung für chirurgische Schablonen nach Anspruch 2, wobei sich der erste Bereich an der okklusalen Seite (14) der chirurgischen Schablone befindet.

4. Anordnung für chirurgische Schablonen nach Anspruch 2 oder 3, wobei der erste Bereich (28a) in Bezug auf das unmittelbar umgebende Material der chirurgischen Schablone zum Aufnehmen des Flanschs (26) versenkt ist.

5. Anordnung für chirurgische Schablonen nach einem der Ansprüche 2-4, wobei sich der zweite Bereich an der apikalen Seite (16) der chirurgischen Schablone befindet.

6. Anordnung für chirurgische Schablonen nach einem der Ansprüche 2-5, wobei der zweite Bereich angepasst ist, um den gebogenen Abschnitt der Führungsbuchse aufzunehmen.

7. Anordnung für chirurgische Schablonen nach einem der vorhergehenden Ansprüche, wobei die Führungsbuchse aus Metallblech hergestellt ist.

8. Anordnung für chirurgische Schablonen nach einem der vorhergehenden Ansprüche ohne zusätzliche Mittel zum Befestigen der Führungsbuchse, wie etwa Zement oder Kleber oder Gewinde.

9. Verfahren zum Befestigen einer Führungsbuchse (22) in einer Durchgangsbohrung (18) einer dentalen chirurgischen Schablone (12), wobei das Verfahren Folgendes umfasst:
Platzieren der Führungsbuchse in der Durchgangsbohrung; und
Vernieten der Führungsbuchse an der dentalen chirurgischen Schablone.

10. Verfahren nach Anspruch 9, wobei das Vernieten der Führungsbuchse an der dentalen chirurgischen Schablone Folgendes umfasst:
Abstützen eines Endes (24a) der Führungsbuchse unter Verwendung eines Ambosses (32), während ein Abschnitt (30) der Führungsbuchse an dem gegenüberliegenden Ende (24b) unter Verwendung eines Formwerkzeugs (34) gebogen wird, das angepasst ist, um sich axial zu der Führungsbuchse zu bewegen.

11. Verfahren nach Anspruch 10, wobei das Formwerkzeug einen hervorstehenden zylindrischen Abschnitt (36) einschließt, der eine Basis (38) und ein gegenüberliegendes freies Ende (40) aufweist, und wobei die Basis des hervorstehenden zylindrischen Abschnitts von einer Vertiefung (42) umschlossen ist, die einen im Wesentlichen U-förmigen Querschnitt aufweist und angepasst ist, um den Abschnitt der Führungsbuchse aufzunehmen und zu biegen.

12. Verfahren nach Anspruch 11, wobei der hervorstehende zylindrische Abschnitt (36) einen Durchmesser (D₃₆) aufweist, der dem Innendurchmesser (d₂₂) der Führungsbuchse entspricht.

13. Verfahren nach Anspruch 11 oder 12, wobei der Amboss eine Vertiefung (44) einschließt, die angepasst ist, um den hervorstehenden zylindrischen Abschnitt aufzunehmen, und wobei die Vertiefung eine begrenzte Tiefe (46) in der Axialrichtung aufweist.

14. Verfahren nach einem der Ansprüche 10-13, wobei der Abschnitt der Führungsbuchse zunächst weg von einer Mittellängsachse der Führungsbuchse radial nach außen und dann axial zurück zu der chirurgischen Schablone gebogen wird, sodass das gegenüberliegende Ende der Führungsbuchse in die chirurgische Schablone eingreift.

15. Verfahren nach einem der Ansprüche 10-14, wobei die Führungsbuchse an dem einen Ende einen Flansch aufweist.

## Revendications

1. Agencement de gabarit chirurgical (10) pour une application dentaire, l'agencement de gabarit chirurgical comprenant :
un gabarit chirurgical (12) incluant un trou traversant (18) ; et
un manchon de guidage (22) placé dans le trou traversant et riveté sur le gabarit chirurgical.

2. Agencement de gabarit chirurgical selon la revendication 1, dans lequel le manchon de guidage au niveau d'une extrémité (24a) comporte une bride (26) butant contre une première zone (28a) du gabarit chirurgical, laquelle première zone entoure une première ouverture (20a) du trou traversant adjacente à ladite extrémité (24a), et dans lequel le manchon de guidage à l'extrémité opposée (24b) comporte une partie courbée (30) s'engageant avec une seconde zone (28b) du gabarit chirurgical, laquelle seconde zone entoure une seconde ouverture (20b) du trou traversant adjacente à ladite extrémité opposée (24b).

3. Agencement de gabarit chirurgical selon la revendication 2, dans lequel ladite première zone se trouve sur le côté occlusal (14) du gabarit chirurgical.

4. Agencement de gabarit chirurgical selon la revendication 2 ou 3, dans lequel ladite première zone (28a) est en retrait par rapport au matériau immédiatement environnant du gabarit chirurgical pour loger la bride (26).

5. Agencement de gabarit chirurgical selon l'une quelconque des revendications 2 à 4, dans lequel ladite seconde zone se trouve sur le côté apical (16) du gabarit chirurgical.

6. Agencement de gabarit chirurgical selon l'une quelconque des revendications 2 à 5, dans lequel ladite seconde zone est adaptée pour loger la partie courbée du manchon de guidage.

7. Agencement de gabarit chirurgical selon une quelconque revendication précédente, dans lequel le manchon de guidage est réalisé en feuille de métal.

8. Agencement de gabarit chirurgical selon une quelconque revendication précédente, dépourvu de moyen additionnel de fixation du manchon de guidage, tel que le ciment ou la colle ou des filetages.

9. Procédé de fixation d'un manchon de guidage (22) dans un trou traversant (18) d'un gabarit chirurgical dentaire (12), lequel procédé comprend :
la mise en place du manchon de guidage dans le trou traversant ; et
le rivetage du manchon de guidage au gabarit chirurgical dentaire.

10. Procédé selon la revendication 9, dans lequel le rivetage du manchon de guidage au gabarit chirurgical dentaire comprend :
le support d'une extrémité (24a) du manchon de guidage à l'aide d'une enclume (32) tandis qu'une partie (30) du manchon de guidage à l'extrémité opposée (24b) est courbée à l'aide d'un outil de formage (34) adapté pour se déplacer axialement vers le manchon de guidage.

11. Procédé selon la revendication 10, dans lequel l'outil de formage comporte une partie cylindrique saillante (36) ayant une base (38) et une extrémité libre opposée (40), et dans lequel la base de la partie cylindrique saillante est encerclée par un évidement (42) ayant une section transversale sensiblement en forme de U et adapté pour recevoir et courber ladite partie du manchon de guidage.

12. Procédé selon la revendication 11, dans lequel la partie cylindrique saillante (36) a un diamètre (D₃₆) correspondant au diamètre intérieur (d₂₂) du manchon de guidage.

13. Procédé selon la revendication 11 ou 12, dans lequel l'enclume inclut un évidement (44) adapté pour recevoir ladite partie cylindrique saillante, et dans lequel l'évidement a une profondeur limitée (46) dans la direction axiale.

14. Procédé selon une quelconque revendication 10 à 13, dans lequel ladite partie du manchon de guidage est tout d'abord courbée radialement vers l'extérieur à l'opposé d'un axe longitudinal central du manchon de guidage puis axialement vers l'arrière vers le gabarit chirurgical de sorte que ladite extrémité opposée du manchon de guidage engage le gabarit chirurgical.

15. Procédé selon une quelconque revendication 10 à 14, dans lequel ledit manchon de guidage à ladite extrémité comporte une bride.
